# EUROPEAN PATENT APPLICATION

(11) **EP 3 961 072 A1**
(43) Date of publication of application: **02.03.2022**
(21) Application number: 19949842.9
(22) Date of filing: 16.12.2019
(51) Int. Cl.: F16K 1/00, F16K 1/52, F16K 31/06, F16K 31/08

(54) **VALVE STRUCTURE AND HOUSEHOLD APPLIANCE**

(30) Priority: 24.10.2019 CN 201911018885
(71) Applicant: Foshan Shunde Midea Washing Appliances Manufacturing Co., Ltd., Foshan, Guangdong 528311 (CN)
(72) Inventor: ZHANG, Yibin, Foshan, Guangdong 528311 (CN); ZHANG, Fan, Foshan, Guangdong 528311 (CN); HAN, Jie, Foshan, Guangdong 528311 (CN)
(74) Representative: Whitlock, Holly Elizabeth Ann
(86) International application number: PCT/CN2019/125718
(87) International publication number: WO 2021/077578

(57) **Abstract**

A valve structure and a household appliance. The valve structure (100) comprises a valve seat (12) and a switch valve (14); the switch valve (14) is mounted on the valve seat (12), and the valve seat (12) is provided with a fluid passage (126), an air inlet (122) and an air outlet (124), the fluid passage (126) comprises a first passage (1262) and a second passage (1264), the first passage (1262) is in communication with the air outlet (124) and the air inlet (122), and the second passage (1264) is in communication with the air outlet (124); and the switch valve (14) comprises a movable member (18), the switch valve (14) is configured to selectively enable, under the control of an electrical signal, the movable member (18) to be in a first position or a second position: when the movable member (18) is in the first position, the movable member (18) blocks the communication between the second passage (1264) and the air inlet (122), and when the movable member (18) is in the second position, the movable member (18) enables the second passage (1264) to be in communication with the air inlet (122).

## Description

### CROSS-REFERENCE TO RELATED APPLICATION

This application claims priority to and benefits of Chinese Patent Application Serial No. 201911018885.7, filed with China National Intellectual Property Administration on October 24, 2019, the entire content of which is incorporated herein by reference.

### FIELD

The present application relates to the field of household appliance technologies, and more particularly, to a valve structure and a household appliance.

### BACKGROUND

At present, gas cookers on the markets typically employ mechanical valves to control gas flow. However, mechanical valves cannot control a size of the gas flow by a program, fire power level needs to be adjusted manually, and degree of intelligence is low, which cannot meet the people's intelligent requirements for the gas cookers.

### SUMMARY

Embodiments of the present application provide a valve structure and a household appliance.

The valve structure provided by embodiments of the present application includes a valve seat and a switch valve. The switch valve is mounted to the valve seat, and the valve seat defines a fluid passage, an inlet and an outlet. The fluid passage includes a first passage and a second passage, the first passage is in communication with the outlet and the inlet, and the second passage is in communication with the outlet. The switch valve includes a movable member, and the switch valve is configured to selectively enable the movable member to be in a first position or a second position under the control of an electrical signal. When the movable member is in the first position, the movable member blocks the communication between the second passage and the inlet, and when the movable member is in the second position, the movable member enables the second passage to be in communication with the inlet.

In the above-described valve structure, the switch valve enables the movable member to be in different positions under the control of an electrical signal, to control whether the second passage and the inlet are communicated, and to further realize control of different fluid flows of the outlet. Thus, the valve structure can have a wider range of application, and people's intelligent requirements for the valve structure can be met.

In some embodiments, the valve structure includes an adjustment member, the adjustment member is partially located in the first passage, and the adjustment member is configured to adjust fluid flow of the first passage when the adjustment member is moved. Thus, accurate control of the fluid flow is effectively promoted.

In some embodiments, the adjustment member is rotatably coupled to the valve seat, or the adjustment member is slidably coupled to the valve seat. Thus, the gas flow of the first passage can be further adjusted by rotating the adjustment member, to realize adjustment of flame size of the gas cooker.

In some embodiments, when the adjustment member is located in different adjustment positions, a gap between the adjustment member and an inner wall of the first passage varies. Thus, the fluid flow passing through the first passage can be adjusted by controlling the gap between the adjustment member and the inner wall of the first passage, to effectively promote accurate control of the fluid flow.

In some embodiments, a bottom peripheral side of the adjustment member has a certain oblique angle. Thus, it can be conveniently utilized to fit with other structures. In some embodiments, a rotation direction of the adjustment member is related to a size of fluid flow of the first passage. Thus, the size of the fluid flow can be adjusted according to the different rotation directions of the adjustment member.

In some embodiments, the first passage includes a first section and a second section, the first section has an extension direction different from an extension direction of the second section, the first section is in communication with the inlet, the second section is in communication with the first section and the outlet, and a side wall of the second section defines a limiting groove configured to limit adjustment quantity of the adjustment member. Thus, different extension directions change the flow direction of the fluid, and the configuration of the adjustment member is convenient; furthermore, the size of the fluid flow of the first passage can be further adjusted by the limiting groove, to make the fluid flow controlled by the valve structure more accurate.

In some embodiments, when a bottom of the adjustment member abuts against an inner wall of the limiting groove, the adjustment member reaches an adjustment position where the first passage has a minimum flow. Thus, the minimum flow of the first passage can be accurate.

In some embodiments, the valve seat defines an auxiliary hole configured to form the first section, and the auxiliary hole is sealed by a first seal member. Thus, it can be ensured that the gas stream is prevented from flowing out of the auxiliary hole, to having good sealing effect.

In some embodiments, the valve structure includes a second seal member, and the second seal member is sealingly coupled to a junction of the valve seat and the switch valve. Thus, the junction of the valve seat and the switch valve is added with a layer of sealing barrier, to prevent leakage of the fluid flow and promote sealing of the junction between the valve seat and the switch valve.

In some embodiments, at least one of the valve seat and the switch valve defines a mounting groove, and the second seal member is at least partially located in the mounting groove. Thus, the second seal member can be mounted and positioned, and meanwhile sealing effect of the second seal member can be more outstanding, to prevent gas leakage.

In some embodiments, the switch valve includes a magnetic member configured to maintain the movable member in the second position. Thus, the provision of the magnetic member enables the second passage and the inlet to maintain a communicated state.

In some embodiments, the movable member includes a portion attractable by the magnetic member, or is made of a material attractable by the magnetic member. Thus, the movable member can be attracted by the magnetic member to control the size of the fluid flow.

In some embodiments, the switch valve includes an elastic member, and the elastic member is coupled to the movable member and configured to maintain the movable member in the first position. Thus, the provision of the elastic member enables the movable member to block the communication of the second passage and the inlet without energizing the switch valve.

In some embodiments, the switch valve internally defines a cavity for movement of the movable member, and the movable member has a part located in the cavity and another part located in the fluid passage. Thus, the size of the fluid flow can be further controlled by movement of the movable member within the cavity.

In some embodiments, the cavity is provided with two electromagnetic coils in a movement direction of the movable member. Thus, the movable member can be controlled.

The household appliance provided by embodiments of the present application includes a valve structure of any one of the above-described embodiments.

In the household appliance described above, the switch valve enables the movable member to be in different positions under the control of an electrical signal, to control whether the second passage and the inlet are communicated, and to further realize control of different fluid flows of the outlet. Thus, the valve structure can have a wider range of application, and people's intelligent requirements for the valve structure can be met.

Additional aspects and advantages of embodiments of present application will be given in part in the following descriptions, become apparent in part from the following descriptions, or be learned from the practice of the embodiments of the present application.

### BRIEF DESCRIPTION OF THE DRAWINGS

These and other aspects and advantages of the present application will become apparent and more readily appreciated from the following descriptions made with reference to the drawings, in which:
FIG. 1 is a cross-sectional view of a valve structure according to an embodiment of the present application;
FIG. 2 is an enlarged view of a part I of the valve structure in FIG. 1;
FIG. 3 is a cross-sectional view of a movable member according to an embodiment of the present application in a first position; and
FIG. 4 is a cross-sectional view of a movable member according to an embodiment of the present application in a second position.

Reference description of main elements:
valve structure 100, valve seat 12, inlet 122, outlet 124, fluid passage 126, first passage 1262, first section 12622, second section 12624, side wall 1263, second passage 1264, switch valve 14, elastic member 144, adjustment member 16, first seal member 162, auxiliary hole 164, limiting groove 166, movable member 18, mounting groove 182, second seal member 184.

### DETAILED DESCRIPTION OF THE DISCLOSURE

Embodiments of the present application will be described in detail below, and examples of the embodiments are illustrated in the drawings, in which the same or similar elements and the elements having same or similar functions are denoted by like reference numerals throughout the descriptions. The embodiments described herein with reference to drawings are explanatory, used to generally explain the present application, and should not be construed as limitation to the present application.

In the description of the present application, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," and "counterclockwise" should be construed to refer to the orientation as then described or as shown in the drawings under discussion. These relative terms are for convenience of description of the present application and simplification of the description, and do not indicate or suggest that the referred device or element must have a particular orientation, and be constructed or operated in a particular orientation. In addition, terms such as "first" and "second" are used herein for purposes of description and are not intended to indicate or imply relative importance or significance or to imply the number of indicated technical features. Thus, the feature defined with "first" and "second" may explicitly or implicitly comprises one or more of this feature. In the description of the present invention, the term "a plurality of' means two or more than two, unless specified otherwise.

In the present specification, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature; while a first feature "below," "under," or "on bottom of' a second feature may include an embodiment in which the first feature is right or obliquely "below," "under," or "on bottom of' the second feature, or just means that the first feature is at a height lower than that of the second feature.

In the description of the present application, unless specified or limited otherwise, the terms "mounted," "connected," "coupled," and the like are used broadly, and may be, for example, fixed connections, detachable connections, or integral connections; may also be mechanical or electrical connections; may also be direct connections or indirect connections via intervening structures; may also be inner communications or interactions of two elements, which can be understood by those skilled in the art according to specific situations.

Various embodiments or examples are provided in the following description to implement different structures of the present application. In order to simplify the disclosure of the present application, certain elements and settings will be described. Certainly, these elements and settings are only by way of example and are not intended to limit the present application. In addition, reference numerals and/or letters may be repeated in different examples in the present application. This repeating is for the purpose of simplification and clarity and does not refer to relations between different embodiments and/or settings. Furthermore, examples of different processes and materials are provided in the present application. However, it would be appreciated by those skilled in the art that other processes and/or materials may be also applied.

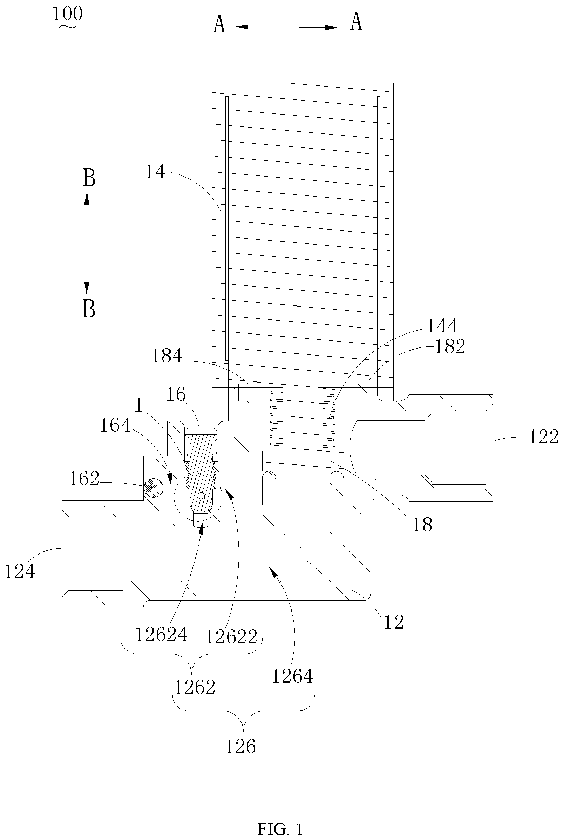

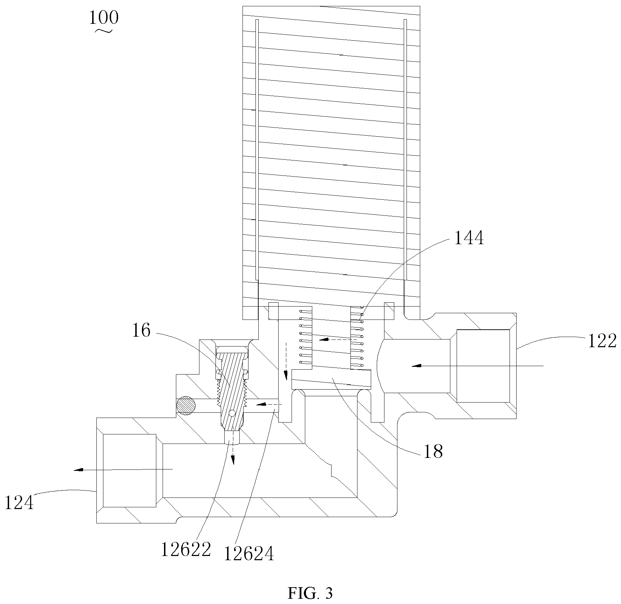

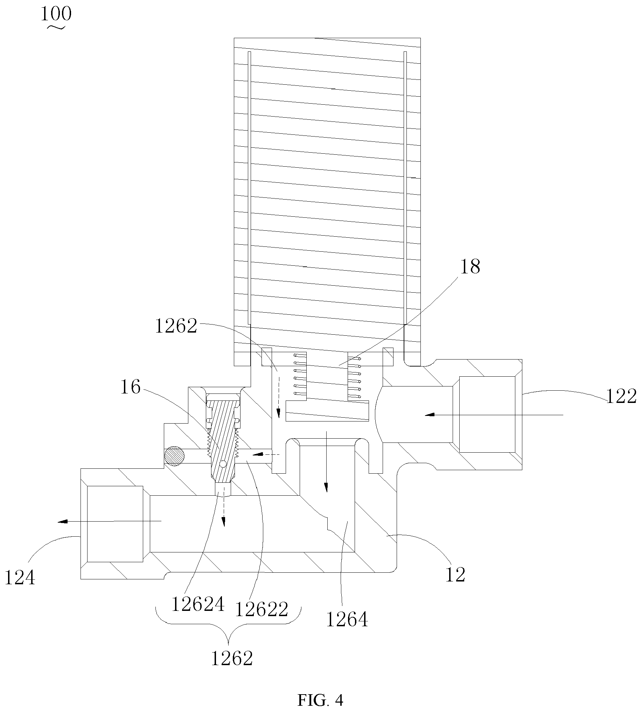

With reference to FIGS. 1 to 4, a valve structure 100 according to embodiments of the present application includes a valve seat 12 and a switch valve 14. The switch valve 14 is mounted to the valve seat 12. The valve seat 12 defines a fluid passage 126, an inlet 122 and an outlet 124. The fluid passage 126 includes a first passage 1262 and a second passage 1264. The first passage 1262 is in communication with the outlet 124 and the inlet 122, and the second passage 1264 is in communication with the outlet 124. The switch valve 14 includes a movable member 18, and the switch valve 14 is configured to selectively enable the movable member 18 to be in a first position or a second position under the control of an electrical signal. When the movable member 18 is in the first position, the movable member 18 blocks the communication between the second passage 1264 and the inlet 122, as illustrated in FIG. 3. When the movable member 18 is in the second position, the movable member 18 enables the second passage 1264 to be in communication with the inlet 122, as illustrated in FIG. 4.

In the above-described valve structure 100, the switch valve 14 enables the movable member 18 to be in different positions under the control of an electrical signal, to control whether the second passage 1264 and the inlet 122 are communicated, and to further realize control of different fluid flows of the outlet 124. Thus, the valve structure 100 can have a wider range of application, and people's intelligent requirements for the valve structure 100 can be met.

It could be understood that, it is hard to control fire power level of a gas cooker by adjusting gas flow manually, and this has high time cost and energy consumption, thus, use difficulty and power consumption of the gas cooker are increased, and use effect of the gas cooker is greatly affected. Therefore, in order to promote control accuracy and convenience of a gas valve, it is necessary to improve the valve structure 100, to realize the control of different flows of the outlet 124. Additionally, this valve structure 100 is not limited to be applied to the gas cooker, and may also be applied to household appliances that need to control fluid flow. The fluid may include liquid and gas.

With reference to FIGS. 1 to 4, specifically, the switch valve 14 is provided at a top of the valve seat 12, and the valve seat 12 defines the fluid passage 126, the outlet 124 and the inlet 122. When the valve structure 100 is applied to the gas cooker, the inlet 122 may be coupled to a mechanical valve through a first coupling tube, and the outlet 124 may be coupled to a burner through a second coupling tube. When the gas cooker is in operation, gas stream enters the valve structure 100 from the mechanical valve through the first coupling tube, enters the second coupling tube via the fluid passage 126, and enters the burner. In addition, adjustment of the fire power level of the gas cooker can also be controlled by the front-end mechanical valve.

The outlet 124 and the inlet 122 may have a round hole shape, and may also have an oval, oblong, polygonal shape or other shapes, which is not specifically limited herein.

Further, the fluid passage 126 may be divided into a first passage 1262 and a second passage 1264. The first passage 1262 is in communication with the outlet 124 and the inlet 122, and the second passage 1264 is in communication with the outlet 124. The switch valve 14 is provided with a movable member 18, and under the control of the electrical signal, the position of the movable member 18 may be flexibly controlled, to limit on/off of the fluid flow of the second passage 1264. When the movable member 18 is in the first position, the communication between the second passage 1264 and the inlet 122 is blocked by the movable member 18, and the gas cannot pass through the second passage 1264 to the outlet 124. In this case, the gas only can circulate in the first passage 1262, and the gas supply to the gas cooker is small, to realize low fire power. When the movable member 18 is in the second position, the movable member 18 enables the communication between the second passage 1264 and the inlet 122, the gas can reach the outlet 124 via the first passage 1262 and the second passage 1264, and the gas supply to the gas cooker is large, to realize high fire power. Thus, provision of the movable member 18 enables the user to realize the control of the gas flow in accordance with the actual needs.

With reference to FIG. 1, an aperture size of the first passage 1262 is smaller than an aperture size of the second passage 1264, and the aperture size of the second passage 1264 may be smaller than sizes of the inlet 122 and the outlet 124. In this way, during assembly, the inlet 122 and the outlet 124 can be coupled to the second passage 1264 from right to left along a length direction A-A of the valve structure 100 smoothly and conveniently, to make internal coupling of the valve structure 100 more reliable. Additionally, the second passage 1264 may be a main passage, and the first passage 1262 may be an auxiliary passage. The second passage 1264 plays a leading role in outflow of large-flow gas stream, and the first passage 1262 plays a supplement role in adjusting flow of the gas stream. For example, when a lot of gas stream is needed, the switch valve 14 may be turned on under the control of the electrical signal, to bring the movable member 18 into the second position, realizing that the first passage 1262 and the second passage 1264 are in full communication with the inlet 122; when less gas flow is needed, under the control of the electrical signal, the switch valve 14 may bring the movable member 18 into the first position, to close the communication of the second passage 1264, and maintain the communication between the first passage 1262 and the inlet 122. Thus, the gas flow can be regulated rapidly and drastically, and the gas flow can also be fine controlled, to promote intelligence of the gas cooker by the valve structure 100.

In some embodiments, the valve structure 100 includes an adjustment member 16. The adjustment member 16 is partially located in the first passage 1262, and the adjustment member 16 is configured to adjust fluid flow of the first passage 1262 when the adjustment member is moved. Thus, accurate control of the fluid flow is effectively improved.

With reference to FIG. 1, specifically, the adjustment member 16 has a substantially column shape. A bottom face of the adjustment member 16 may be circular or polygonal, which is not specifically limited herein. A bottom peripheral side of the adjustment member 16 has a certain oblique angle, and thus it can be conveniently utilized to fit with other structures, e.g., fitting with a funnel-shaped structure of an inner wall of the first passage 1262.

When the adjustment member 16 is moved to different adjustment positions along a height direction B-B of the valve structure 100, a gap between the adjustment member 16 in the different adjustment positions and the inner wall of the first passage 1262 will change. Thus, the fluid flow passing through the first passage 1262 may be adjusted by controlling a size of the gap between the adjustment member 16 and the inner wall of the first passage 1262, to promote accurate control of the fluid flow effectively. For example, when the valve structure 100 of the gas cooker is adjusted, the adjustment member 16 is located in one of the adjustment positions, the gap between the adjustment member 16 and the inner wall of the first passage 1262 changes from small to large, and the gas flow passing through the first passage 1262 increases, to adjust flame and fire power of the gas cooker and increase the fire power of the gas cooker.

In some embodiments, the adjustment member 16 may be rotatably coupled to the valve seat 12. Thus, the gas flow of the first passage 1262 can be further adjusted by rotating the adjustment member 16, to realize adjustment of the flame size of the gas cooker.

Specifically, the adjustment member 16 may have an external thread, and coupling manner of the adjustment member 16 and the valve seat 12 may employ a threaded coupling manner. In the process of rotating the adjustment member 16, there may be two different rotation directions. For example, when the rotation direction is a clockwise rotation direction, the gap between the adjustment member 16 and the inner wall of the first passage 1262 changes from large to small; and when the rotation direction is a counterclockwise rotation direction, the gap between the adjustment member 16 and the inner wall of the first passage 1262 changes from small to large. It could be understood that, in other examples, rotation directions and change trend of the size of the gap may also have other relations, which is not specifically limited herein. That is, the rotation direction of the adjustment member 16 is related to the size of the fluid flow of the first passage 1262. Thus, the size of the fluid flow can be adjusted according to the different rotation directions of the adjustment member 16.

In other embodiments, the adjustment member 16 may also be slidably coupled to the valve seat 12. Thus, the adjustment of the fluid flow of the first passage 1262 can also be realized.

In some embodiments, the first passage 1262 includes a first section 12622 and a second section 12624. An extension direction of the first section 12622 is different from an extension direction of the second section 12624. The first section 12622 is in communication with the inlet 122, and the second section 12624 is in communication with the first section 12622 and the outlet 124. A side wall 1263 of the second section 12624 defines a limiting groove 166, and the limiting groove 166 is configured to limit adjustment quantity of the adjustment member 16. Thus, the difference of the extension directions changes the flow direction of the fluid, and the configuration of the adjustment member 16 is convenient; furthermore, the size of the fluid flow of the first passage 1262 can be further adjusted by the limiting groove 166, to make the fluid flow controlled by the valve structure 100 more accurate.

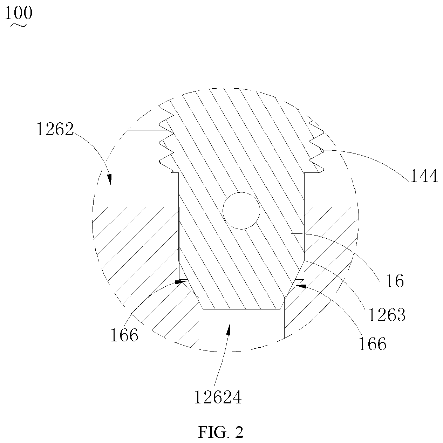

Specifically, with reference to FIGS. 1 and 2, the first passage 1262 may be comprised of the first section 12622 and the second section 12624. The extension direction of the first section 12622 is along the length direction A-A of the valve structure 100, the extension direction of the second section 12624 is along the height direction B-B of the valve structure 100, and the extension direction of the first section 12622 and the extension direction of the second section 12624 are perpendicular to each other. In this way, processing of the first section and the second section is simple. When in operation, the fluid flows from the inlet 122 to the first section 12622, to the second section 12624 through the first section 12622, and to the outlet 124 through the second section 12624. Thus, differences of the extension directions change the flow direction of the fluid, to effectively guide the fluid to the outlet 124.

The limiting groove 166 is obliquely provided on a peripheral side wall 1263 of the second section 12624, and the limiting groove 166 is at a certain angle to a horizontal plane. By controlling the adjustment member 16, a gap between the adjustment member 16 and the limiting groove 166 is changed, and the flow of the gas stream is also changed accordingly. The smaller the gap between the adjustment member 16 and the limiting groove 166, the smaller the flow of the gas stream is, to further limit the adjustment quantity of the adjustment member 16. The funnel-shaped structure of the inner wall of the first passage 1262 described above may form the limiting groove 166.

Specifically, the limiting groove 166 may have a funnel shape, to conduct the fluid flow to the outlet 124 conveniently. For example, when the valve structure 100 is in a closed state, the fluid flow passes through the first section 12622 of the first passage 1262; the conduction of the gas stream can be facilitated due to the oblique angle of the limiting groove 166, and it is conducted to the second section 12624 rapidly along an oblique direction and further to the outlet 124. When the bottom of the adjustment member 16 abuts against an inner wall of the limiting groove 166, the adjustment member 16 reaches an adjustment position where the first passage 1262 has a minimum flow. Thus, the minimum flow of the first passage 1262 may be accurate.

In some embodiments, the valve seat 12 defines an auxiliary hole 164 configured to form the first section 12622, and the auxiliary hole 164 is sealed by a first seal member 162. Thus, it can be ensured that the gas stream is prevented from flowing out of the auxiliary hole 164, to having good sealing effect.

Specifically, the auxiliary hole 164 may be a round hole, a square hole or a hole having other shapes. The provision of the auxiliary hole 164 facilitates processing and fabrication of the valve structure 100. The first seal member 162 may be a ball, a cuboid or other irregular shapes, which is not specifically limited herein. The first seal member 162 may be made of metal material or non-metal material, and has a size matching the auxiliary hole 164. The first seal member 162 may tightly seal the auxiliary hole 164, to prevent the gas stream from flowing out of the auxiliary hole 164.

In some embodiments, the valve structure 100 includes a second seal member 184, and the second seal member 184 is sealingly coupled to a junction of the valve seat 12 and the switch valve 14. Thus, the junction of the valve seat 12 and the switch valve 14 is added with a layer of sealing barrier, to prevent leakage of the fluid flow and promote sealing of the junction between the valve seat 12 and the switch valve 14.

With reference to FIG. 1, specifically, the switch valve 14 may be fixedly coupled to the valve seat 12 by means of screw coupling, or by means of snap-fit, welding, interference fit or combinations of the aforementioned manners. For example, in the present embodiment, the switch valve 14 is fixedly coupled to the valve seat 12 by a screw. The junction of the valve seat 12 and the switch valve 14 is clamped with the second seal member 184, and the clearance between the valve seat 12 and the switch valve 14 can be tightly sealed, to prevent gas leakage. The valve seat 12 and the switch valve 14 press the second seal member 184 tightly, and the junction of the valve seat 12 and the switch valve 14 is added with a layer of sealing barrier, to prevent leakage of the fluid flow and promote the sealing of the junction between the valve seat 12 and the switch valve 14.

Additionally, the second seal member 184 may have an annular shape, and may also have an oval shape, a racetrack shape or other combined shapes, which is not specifically limited herein. The second seal member 184 may be made of a soft material, such as rubber and silicone.

In some embodiments, at least one of the valve seat 12 and the switch valve 14 defines a mounting groove 182, and the second seal member 184 is at least partially located in the mounting groove 182. Thus, the second seal member 184 can be mounted and positioned, and meanwhile sealing effect of the second seal member 184 can be more outstanding, to prevent gas leakage.

Specifically, in an example, each of the valve seat 12 and the switch valve 14 defines the mounting groove 182, the two mounting grooves 182 correspond to each other in position, a part of the second seal member 184 is located in the mounting groove 182 of the valve seat 12, and another part of the second seal member 184 is located in the mounting groove 182 of the switch valve 14. In another example, the valve seat 12 defines the mounting groove 182, and the second seal member 184 may be partially or completely located in the mounting groove 182 of the valve seat 12. In yet another example, the switch valve 14 defines the mounting groove 182, and the second seal member 184 may be partially or completely located in the mounting groove 182 of the switch valve 14. The provision of the mounting groove 182 enables the second seal member 184 to seal the junction of the valve seat 12 and the switch valve 14, to avoid leakage of the gas stream from fitting place of the valve seat 12 and the second seal member 184. On the one hand, good sealing effect of the second seal member 184 can be guaranteed; on the other hand, the mounting and positioning of the second seal member 184 can be more stable, to prevent displacement of the second seal member 184 during mounting, which may cause unnecessary influence on the sealing of the valve structure 100.

In some embodiments, with reference to FIGS. 2 to 4, the switch valve 14 includes a magnetic member (not illustrated), and the magnetic member is configured to maintain the movable member 18 in the second position. Thus, the provision of the magnetic member enables the second passage 1264 and the inlet 122 to maintain a communicated state.

Specifically, the movable member 18 may include a portion attractable by the magnetic member, or be made of a magnetically attractable material. Thus, the movable member 18 can be attracted by the magnetic member to control the size of the fluid flow. For example, the movable member 18 may include a component made from iron, or the movable member 81 includes another magnetic member, or the whole movable member 18 is made of iron. In an example, the switch valve 14 may be a priming valve, and the movable member 18 may serve as a plug of the priming valve. The magnetic member may be a permanent magnetic member (e.g., a permanent magnet), and the permanent magnetic member may be located in the top of the switch valve 14. In this way, the switch valve 14 can always attract the movable member 18 by the permanent magnetic member without consuming electricity. In this case, the movable member 18 is in the second position, and the valve structure 100 is in an open and operational state. It could be understood, the magnetic member may also be provided to other positions of the switch valve 14, but is not limited to being in the top of the switch valve 14.

In some embodiments, the switch valve 14 includes an elastic member 144, and the elastic member 144 is coupled to the movable member 18, and the elastic member 144 is configured to maintain the movable member 18 in the first position. Thus, the provision of the elastic member 144 enables the movable member 18 to block the communication of the second passage 1264 and the inlet 122 without energizing the switch valve 14.

Specifically, in an embodiment, the switch valve 14 internally defines a cavity for movement of the movable member 18, a part of the movable member 18 is located in the cavity, and another part of the movable member 18 is located in the fluid passage 126. Thus, the size of the fluid flow can be further controlled by movement of the movable member 18 within the cavity. A side face of the cavity is provided with an electromagnetic coil. Initially, when the coil is not energized, with reference to FIG. 3, the elastic member 144 provides a downward action force (a downward push force) to the movable member 18, to maintain the movable member 18 in the first position, and the second passage 1264 is not in communication with the inlet 122. When the coil is energized (current direction is a first direction), a magnetic field generated by the coil produces an upward action force and attracts the movable member 18, and overcomes the action force of the elastic member 144, to move the movable member 18 from the first position up to the second position; with reference to FIG. 4, the second passage 1264 is in communication with the inlet 122. More specifically, in the above embodiment of the priming valve, the permanent magnet may be located in the top of the cavity, and in the process of movement of the movable member 18 from the first position to the second position, a distance between the permanent magnet and the movable member 18 decreases. When the movable member 18 is in the second position, the permanent magnet is in contact with the movable member 18, and the permanent magnet attracts the movable member 18 and overcome the action force of the elastic member 144, to maintain the movable member 18 in the second position. In this way, the communication of the second passage 1264 and the inlet 122 can be maintained without consuming electricity by the switch valve 14, saving energy. When the coil is energized again (current direction is a second direction opposite the first direction), the magnetic field generated by the coil repels the movable member 18, and produces a downward action force. The downward action force of the coil magnetic field overcomes the upward attraction force of the permanent magnet, or the downward action force of the elastic member 144 and the downward action force of the coil magnetic field cooperatively overcome the upward attraction force of the permanent magnet, the movable member 18 is enabled to break away from the attraction of the permanent magnet, and move from the second position down to the first position, and the second passage 1264 is not in communication with the inlet 122.

In another embodiment, the internal cavity of the switch valve 14 may be provided with two electromagnetic coils in a movement direction of the movable member 18, i.e., a first coil and a second coil. The first coil is located above the second coil. When the first coil is energized and the second coil is not energized, the first coil produces an upward action force on the movable member 18. When the first coil is not energized and the second coil is energized, the second coil produces a downward action force on the movable member 18. The remaining action principle may refer to the above description. Thus, the movable member 18 can be controlled.

It could be understood, in other embodiments, based on a different position of the elastic member 144, the elastic member 144 may also provide a downward pull force to the movable member 18, to maintain the movable member 18 in the first position.

In an illustrated example, the elastic member 144 is a spring. It could be understood, in other embodiments, the elastic member 144 may also be other elements having elastic property.

Implementation of the valve structure according to embodiments of the present application is described by way of a specific embodiment.

The switch valve 14 is a priming valve, the fluid is a gas (the gas may include a liquefied gas and a natural gas), and the household appliance is a gas cooker. With reference to FIG. 3, the valve structure 100 is in a normal closed state, and the gas cooker is in a non-operation state.

The valve structure 100 receives a positive pulse signal sent by program control of the gas cooker at a moment the gas cooker is ignited, the priming valve attracts the movable member 144 up, and the priming valve can always attract the movable member depending on the internal permanent magnet, without consuming electricity. In this case, the valve structure 100 is in the open and operational state, the gas flows smoothly in the whole gas line, and adjustment of the fire power level of the cooker is controlled by the front-end mechanical valve.

A main gas path is represented by solid lines with arrows as illustrated in FIG. 3, and the gas enters from the inlet 122, passes through the second passage 1264 below the movable member 144, and reaches the outlet 124. An auxiliary gas path is represented by broken lines with arrows as illustrated in FIGS. 3 and 4, the gas passes through a passage around the movable member 18, flows through the adjustment member 16, and then reaches the outlet 124. The gas flow passing through the auxiliary path can be freely adjusted by the adjustment member 16, and can be large or small. In particular for a gas cooker having a different gas source, under the same load, it can be adjusted to a rated flow just by the adjustment member 16.

As illustrated in FIG. 3, the valve structure 100 receives a negative pulse signal sent by the program control, the priming valve acts to eject the movable member, to seal and close the main gas path. In this case, the valve structure 100 is in a closed and operational state, and the adjustment of the fire power level of the cooker is controlled by the size of the flow passing through the adjustment member 16.

By sending the positive and negative pulse signals by the program of the gas cooker and controlling opening and closing of the priming valve, rapid switching between the large and small fire states of the gas cooker can be realized, and after the switching is finished, the priming valve does not consume battery power of the gas cooker until receiving a next pulse signal sent by the program.

A household appliance according to embodiments of the present application includes a valve structure 100 according to any one of the above embodiments.

In the household appliance described above, the switch valve 14 enables the movable member 18 to be in different positions under the control of an electrical signal, to control whether the second passage 1264 and the inlet 122 are communicated, and to further realize control of different fluid flows of the outlet 124. Thus, the valve structure 100 can have a wider range of application, and people's intelligent requirements for the valve structure 100 can be met.

Specifically, the household appliance includes but is not limited to a gas stove, a water heater, a washing machine, a dishwasher, a water dispenser, a water purifier, or other household appliances that need flow control. The household appliance intelligently realizes control of different fluid flows under the control of the program of the valve structure 100, which not only saves fluid flow of the household appliance, but also enables the user to operate easily and accurately.

Reference throughout this specification to "an embodiment," "some embodiments," "schematic embodiment", "an example," "a specific example," or "some examples," means that a particular feature, structure, material, or characteristic described in connection with the embodiment or example is included in at least one embodiment or example of the present application. Thus, the schematic representations of the above phrases in this specification are not necessarily referring to the same embodiment or example. Furthermore, the particular features, structures, materials, or characteristics may be combined in any suitable manner in one or more embodiments or examples.

Although embodiments of the present application have been shown and described, it would be appreciated by those skilled in the art that changes, modifications, alternatives, and variations can be made in those embodiments without departing from principles and purposes of the present disclosure. The scope of the present application is defined by the claims and their equivalents.

## Claims

1. A valve structure, comprising:
a valve seat defining a fluid passage, an inlet and an outlet, the fluid passage comprising a first passage and a second passage, the first passage being in communication with the outlet and the inlet, the second passage being in communication with the outlet; and
a switch valve mounted to the valve seat and comprising a movable member, the switch valve being configured to selectively enable the movable member to be in a first position or a second position under control of an electrical signal, when the movable member is in the first position, the movable member blocking the communication between the second passage and the inlet, when the movable member is in the second position, the movable member enabling the second passage to be in communication with the inlet.

2. The valve structure according to claim 1, wherein the valve structure comprises an adjustment member, the adjustment member is partially located in the first passage, and the adjustment member is configured to adjust fluid flow of the first passage when the adjustment member is moved.

3. The valve structure according to claim 2, wherein the adjustment member is rotatably coupled to the valve seat; or the adjustment member is slidably coupled to the valve seat.

4. The valve structure according to claim 2, wherein when the adjustment member is located in different adjustment positions, a gap between the adjustment member and an inner wall of the first passage varies.

5. The valve structure according to claim 2, wherein a bottom peripheral side of the adjustment member has a certain oblique angle.

6. The valve structure according to claim 3, wherein a rotation direction of the adjustment member is related to a size of fluid flow of the first passage.

7. The valve structure according to claim 2, wherein the first passage comprises a first section and a second section, the first section has an extension direction different from an extension direction of the second section, the first section is in communication with the inlet, the second section is in communication with the first section and the outlet, and a side wall of the second section defines a limiting groove configured to limit adjustment quantity of the adjustment member.

8. The valve structure according to claim 7, wherein when a bottom of the adjustment member abuts against an inner wall of the limiting groove, the adjustment member reaches an adjustment position where the first passage has a minimum flow.

9. The valve structure according to claim 7, wherein the valve seat defines an auxiliary hole configured to form the first section, and the auxiliary hole is sealed by a first seal member.

10. The valve structure according to claim 1, wherein the valve structure comprises a second seal member sealingly coupled to a junction of the valve seat and the switch valve.

11. The valve structure according to claim 10, wherein at least one of the valve seat and the switch valve defines a mounting groove, and the second seal member is at least partially located in the mounting groove.

12. The valve structure according to claim 1, wherein the switch valve comprises a magnetic member configured to maintain the movable member in the second position.

13. The valve structure according to claim 12, wherein the movable member comprises a portion attractable by the magnetic member, or is made of a material attractable by the magnetic member.

14. The valve structure according to claim 1, wherein the switch valve comprises an elastic member, and the elastic member is coupled to the movable member and configured to maintain the movable member in the first position.

15. The valve structure according to claim 14, wherein the switch valve internally defines a cavity for movement of the movable member, and the movable member has a part located in the cavity and another part located in the fluid passage.

16. The valve structure according to claim 15, wherein the cavity is provided with two electromagnetic coils in a movement direction of the movable member.

17. A household appliance, comprising a valve structure according to any one of claims 1 to 16.
